# EUROPÄISCHE PATENTSCHRIFT

(11) **EP 0 774 590 B1**
(45) Veröffentlichungstag und Bekanntmachung des Hinweises auf die Patenterteilung: **20.10.1999**
(21) Anmeldenummer: 95118171.8
(22) Anmeldetag: 18.11.1995
(51) Int. Cl.: F16C 1/16

(54) **Spannschloss für Kabelzug**
Tensioning device for control cable
Dispositif de tension pour câble de commande

(43) Veröffentlichungstag der Anmeldung: 21.05.1997
(73) Patentinhaber: Schwarzbich, Jörg, D-33615 Bielefeld (DE)
(72) Erfinder: Schwarzbich, Jörg, D-33615 Bielefeld (DE)
(74) Vertreter: TER MEER STEINMEISTER & PARTNER GbR

(56) Entgegenhaltungen:
- DE-A- 4 321 985
- FR-A- 850 578
- FR-A- 2 663 414
- US-A- 2 944 437
- US-A- 4 398 109

## Beschreibung

Die Erfindung betrifft einen Spannschloß für einen Kabelzug gemäß dem Oberbegriff des Patentanspruchs 1.

Solche Spannschlösser dienen dazu, eine Drehbewegung in eine Zugbewegung eines Kabel- oder Seilzuges oder gegebenenfalls auch in eine Schubbewegung des Innenkabels eines Bowdenzuges umzusetzen. Ein Anwendungsbeispiel für ein solches Spannschloß ist die Verstellung einer Lordosenstütze in der Rückenlehne eines Kraftfahrzeugsitzes mit Hilfe eines Bowdenzuges. Das Spannschloß dient dann dazu, den Bowdenzug mit Hilfe eines am Sitz angebrachten Handrades oder Hebels zu betätigen.

Ein bekanntes Spannschloß dieser Art (DE-C-43 21 985) weist ein im wesentlichen zylindrisches Gehäuse auf, das starr am Sitzgestell zu befestigen ist und an einem Ende eine Aufnahme für das Außenkabel des Bowdenzuges sowie eine Öffnung in der Mantelfläche aufweist, durch die das verdickte Ende des Innenkabels des Bowdenzuges eingeführt werden kann. Ein Gewindeteil in der Form eines Gewindebolzens ist drehfest und axial verschiebbar in dem Gehäuse geführt und weist an einem Ende eine Ausnehmung auf. die mit der Öffnung im Mantel des Gehäuses zur Deckung gebracht werden kann, so daß das Innenkabel in dieser Ausnehmung eingehakt werden kann. Der Gewindebolzen steht mit einer Mutter in Gewindeeingriff, die drehbar und axialfest in dem Gehäuse gehalten ist und außerhalb des Gehäuses eine Drehhandhabe aufweist, auf die beispielsweise das Handrad aufgekeilt werden kann. Durch Drehen des Handrades läßt sich somit der Gewindebolzen axial in dem Gehäuse verstellen, so daß ein Zug auf das Innenkabel des Bowdenzuges ausgeübt werden kann.

Bei diesem Spannschloß schließt sich an den Gewindeabschnitt des Gewindebolzens axial ein Fortsatz an, in dem die Ausnehmung für den Kabelzug ausgebildet ist. Hierdurch ergibt sich insgesamt eine relativ große axiale Baulänge, so daß es unter Umständen schwierig ist, das Spannschloß so im Polster der Rückenlehne unterzubringen, daß es für den Benutzer nicht hinderlich ist.

Aufgabe der Erfindung ist es deshalb, die Baulänge des Spannschlosses zu verringern.

Diese Aufgabe wird erfindungsgemäß durch die Merkmale der kennzeichnenden Teils des Anspruchs 1gelöst.

Das verdickte Ende des Kabelzuges kann somit vollständig in der Ausnehmung untergebracht werden, so daß sich die Mutter über die Ausnehmung schrauben läßt. Die Länge des Gewindebolzens und damit die Gesamtlänge des Spannschlosses wird dadurch beträchtlich verringert.

Vorteilhafte Weiterbildungen und Ausgestaltungen der Erfindung ergeben sich aus den Unteransprüchen.

Bei einem Spannschloß für einen Bowdenzug kann auch der am Gehäuse ausgebildete Sitz für das Ende des Außenkabels des Bowdenzuges in die Stirnfläche des Gewindebolzens eingelassen sein, wodurch eine weitere Verkürzung der Baulänge erreicht wird. Da in diesem Fall das Außenkabel auf einer relativ großen Länge innerhalb des Gehäuses geführt ist, kann ein Abknicken des Bowdenzuges am Ende des Außenkabels verhindert werden, ohne daß eine zusätzliche Kabel tülle an dem Gehäuse angebracht werden muß. Hierdurch wird auch eine bauliche Vereinfachung erreicht.

Zum Verstellen der Lordosenstütze muß der Benutzer eine gewisse Kraft auf das Handrad ausüben. Wenn das Ende des Verstellbereichs erreicht ist, erkennt der Benutzer dies daran, daß der Widerstand beim Drehen des Handrades zunimmt, weil die Mutter auf dem Gewindebolzen fest angezogen wird. Bei diesem Anziehen der Mutter kommt es zu einer elastischen Verformung der beteiligten Gewindeteile. so daß die Mutter auf dem Gewindebolzen fest verspannt wird. Dies hat den Nachteil, daß beim späteren Drehen des Handrades in entgegengesetzte Richtung ein verhältnismäßig großer Anfangswiderstand überßwunden werden muß.

Gemäß einer Weiterbildung der Erfindung wird dieser Nachteil durch die in den Ansprüchen 3 bis 7 angegebenen Merkmale überwunden. Das Lösungsprinzip ist als solches aus US-A-2 944 437 bekannt.

Bevorzugt weist der Gewindebolzen, am Ende seines Gewindes einen radial vorspringenden Nocken auf, der eine parallel zur Achse des Gewindebolzens verlaufende und somit in Umfangsrichtung wirkende Anschlagfläche bildet. An dem anderen Gewindeteil, der Mutter, ist am entsprechenden Ende des Gewindes ein zugehöriger Gegenanschlag vorgesehen. Der Nocken wird zum Gewinde des Bolzens hin durch eine mindestens entsprechend der Gewindesteigung ansteigende Fläche begrenzt. Hierdurch ist sichergestellt, daß sich der Gegenanschlag bei der vorletzten Gewindeumdrehung noch ungehindert an dem Nocken vorbeibewegen kann und erst am Ende der letzten Gewindeumdrehung an der Anschlagfläche des Nockens anschlägt. Die Anschlagfläche kann unabhängig von der Ganghöhe und Profiltiefe des Gewindes vergrößert werden, indem die radialen Abmessungen des Nockens geeignet gewählt werden. Auf diese Weise läßt sich sicherstellen, daß die in der Praxis zu erwartenden Drehmomente sicher aufgenommen werden können, ohne daß es zu einer Beschädigung oder Zerstörung des Gewindes oder der Anschläge kommt. Aufgrund der Hebelwirkung nimmt bei einer Vergrößerung der radialen Abmessungen des Nockens das zulässige Grenzdrehmoment überproportional zu, so daß schon mit einer geringen radialen Verlängerung des Nockens eine beträchtliche Erhöhung des Grenzdrehmoments erreicht werden kann.

Durch Verwendung eines mehrgängigen Gewindes und eine der Zahl der Gewindegänge entsprechende Anzahl von Nocken kann die verfügbare Anschlagfläche vervielfacht werden.

Der Gewindebolzen kann auch an beiden Enden seines Gewindeabschnitts mit Nocken versehen sein, so daß die Verstellbewegung in beide Richtungen durch Anschläge begrenzt wird.

Bei Spannschlössern aus Kunststoff besteht üblicherweise die Mutter aus zwei Halbschalen, die als Kunststoff-Spritzteile hergestellt werden können. In diesem Fall kann der Gegenanschlag für den Nocken einfach durch die Teilungsebene der Mutter gebildet werden.

Im folgenden wird ein bevorzugtes Ausführungsbeispiel der Erfindung anhand der beigefügten Zeichnungen näher erläutert.

Es zeigen:
- Fig. 1: eine Seitenansicht des Spannschlosses;
- Fig. 2: eine Stirnansicht des Spannschlosses von links in Figur 1;
- Fig. 3: einen Gewindebolzen des Spannschlosses;
- Fig 4: einen Teilschnitt durch den Gewindebolzen und das Gehäuse des Spannschlosses;
- Fig. 5: eine Halbschale einer Mutter des Spannschlosses; und
- Fig. 6: die Kombination aus Gewindebolzen und Mutter in einer Anschlagposition am Ende des Verstellbereichs des Spannschlosses.

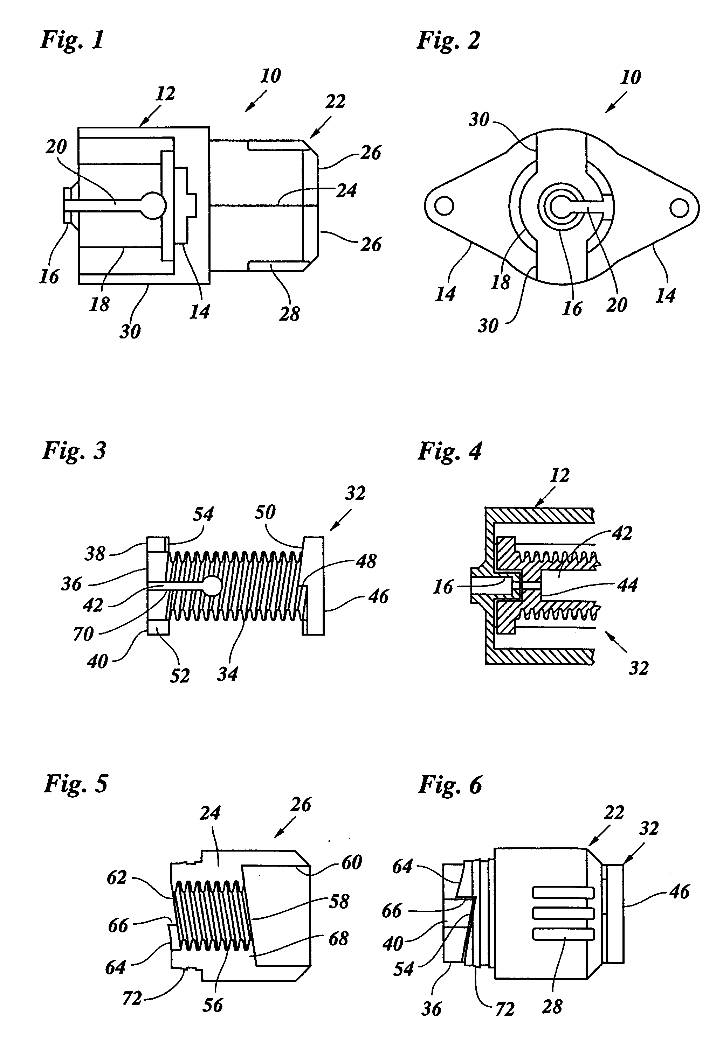

Das in Figuren 1 und 2 in seiner Gesamtheit gezeigte Spannschloß 10 weist ein zylindrisches Gehäuse 12 aus Kunststoff auf, das an einem Ende mit zwei radial vorspringenden, einander diametral gegenüberliegenden Befestigungsflanschen 14 versehen ist. Am entgegengesetzten Ende ist das Gehäuse 12 durch eine Stirnwand abgeschlossen, die eine Tülle 16 für das Außenkabel eines nicht gezeigten Bowdenzuges bildet. In der Umfangswand 18 des Gehäuses 12 ist eine schlüssellochförmige Öffnung 20 ausgebildet, die mit der Tülle 16 in Verbindung steht und es gestattet, das am Ende kugelförmig verdickte Innenkabel des Bowdenzuges in das Innere des Gehäuses 12 einzuführen.

In das mit den Befestigungsflanschen 14 versehene Ende des Gehäuses 12 ist eine Mutter 22 so eingerastet, daß sie in dem Gehäuse 12 drehbar ist, aber in Axialrichtung in einer definierten Position gehalten wird. Die Mutter 22 ist in einer diametralen Teilungsfläche 24 in zwei identische Halbschalen 26 unterteilt, die aus Kunststoff gespritzt werden können. Auf dem Umfang der Mutter 22 sind Keilnuten 28 für ein nicht gezeigtes Handrad oder eine vergleichbare Drehhandhabe vorgesehensehen.

Längs der Umfangswand 18 des Gehäuses 12 sind zwei einander diametral gegenüberliegende radiale Ausstülpungen 30 angeordnet, die im Inneren des Gehäuses Führungskanäle zur Verdrehsicherung und Axialführung eines Gewindebolzens 32 (Figur 3) bilden. Der Gewindebolzen 32 ist ebenfalls aus Kunststoff hergestellt und weist einen Gewindeabschnitt 34 mit einem zweigängigen Außengewinde auf. An einem Ende schließt sich an den Gewindeabschnitt 34 ein scheibenförmiges Endstück 36 an, dessen Außendurchmesser mit dem Außendurchmesser des Gewindes übereinstimmt. An der Umfangsfläche des Endstückes 36 sind zwei radial vorspringende, einander diametral gegenüberliegende Nocken 38, 40 ausgebildet, die in die erwähnten Führungsnuten in den Ausstülpungen 30 des Gehäuses eingreifen. Vorzugsweise haben die Nocken 38, 40 und die jeweils zugehörigen Führungsnuten in Umfangsrichtung unterschiedliche Breiten, so daß der Gewindebolzen 32 nur in einer einzigen Winkelposition in das Gehäuse 12 eingeführt werden kann.

In der mit dem Außengewinde versehenen Umfangsfläche des Gewindeabschnitts 34 und in der Umfangsfläche und der Stirnfläche des Endstücks 36 ist eine schlüssellochförmige Ausnehmung 42 ausgebildet, die in ihrer Form der Öffnung 20 des Gehäuses 12 entspricht. Wie aus der Schnittdarstellung in Figur 4 hervorgeht, weist die Ausnehmung 42 im Inneren des Gewindebolzens 32 eine geschlitzte Trennwand 44 auf, an der sich das verdickte Ende des Innenkabels abstützen kann. Wenn die Mutter 22 gedreht wird, verschiebt sich der Gewindebolzen 32 axial in dem Gehäuse 12, so daß ein Zug auf das Innenkabel des Bowdenzuges ausgeübt werden kann. Die Tülle 16 ist in das Innere des Gehäuses 12 hinein verlängert und bildet ein Widerlager für das Außenkabel des Bowdenzuges. Wenn sich der Gewindebolzen in der in Figur 4 gezeigten Postion befindet, liegt dieses Widerlager innerhalb der Ausnehmung 42 dicht vor der Trennwand 44.

Gemäß Figur 3 weist der Gewindebolzen 32 an seinem dem Endstück 36 entgegengesetzten Ende einen scheibenförmigen Nocken 46 auf, der einen größeren Außendurchmesser besitzt als der Gewindeabschnitt 34 und somit radial über das Gewinde hinaus vorspringt. Dieser Nocken bildet am Ende des Gewindeabschnitts 34 in zwei einander diametral gegenüberliegenden Positionen zwei parallel zur Achse des Gewindebolzens orientierte Anschlagflächen 48. Die Länge dieser Anschlagflächen 48 in Axialrichtung des Gewindebolzens entspricht etwa der halben Ganghöhe des zweigängigen Gewindes. Zu dem Gewindeabschnitt 34 hin wird der Nocken 46 durch zwei schraubenförmig entsprechend der Gewindesteigung verlaufende Flächen 50 begrenzt. Auch die Nocken 38, 40 an dem Endstück 36 bilden jeweils eine in Axialrichtung verlaufende Anschlagfläche 52 und werden zu dem Gewindeabschnitt 34 hin durch entsprechend der Gewindesteigung verlaufende schraubenförmige Flächen 54 begrenzt. Die Anschlagflächen 48 und 52 an den entgegengesetzten Enden des Gewindebolzens weisen in entgegengesetzte Drehrichtungen.

Wie am deutlichsten anhand der in Figur 5 gezeigten Halbschale 26 zu erkennen ist, weist die Mutter 22 einen Gewindeabschnitt 56 mit einem zu dem Außengewinde des Gewindebolzens passenden Innengewinde auf. An diesen Gewindeabschnitt schließt sich an einem Ende über eine entsprechend der Gewindesteigung verlaufende Schulter 58 eine Ausnehmung 60 an, in die der Nocken 46 des Gewindebolzens 32 eintreten kann. Am entgegengesetzten Ende wird der Gewindeabschnitt 56 durch zwei entsprechend der Gewindesteigung verlaufende Schultern 62, 64 begrenzt, die um einen Gewindegang gegeneinander versetzt sind und so einen Gegenanschlag 66 für die Anschlagfläche 52 des Nockens 40 an dem Gewindebolzen bilden.

Wenn, wie in Figur 6, der Gewindebolzen 32 in bezug auf die Mutter 22 und das Gehäuse 12 am weitesten nach rechts verstellt ist, so wird ein Weiterdrehen der Mutter 22 dadurch verhindert, daß die Nocken 38, 40 an den zugehörigen Gegenanschlagflächen 66 der beiden Halbschalen 26 anschlagen. Auf diese Weise wird ein unerwünschtes Festspannen der Mutter am Ende des Verstellbereichs zuverlässig verhindert. Durch die schräg verlaufenden Flächen 54 der Nocken und die schrägen Schultern 64, 62 der Mutter wird sichergestellt, daß sich die Gegenanschläge 66 der Mutter 180° vor Erreichen der in Figur 6 gezeigten Endlage noch ungehindert an den Nocken 38, 40 vorbeibewegen können.

In der entgegengesetzten Endlage des Gewindebolzens 32 wird ein entsprechender Anschlagmechanismus durch den Nocken 46 gebildet. Dessen Anschlagflächen 48 schlagen dann an Gegenanschlägen 68 (Figur 5) an, die durch entsprechende Bereiche der Teilungsfläche 24 der Mutter gebildet werden.

Im gezeigten Beispiel sind die Positionen der Anschlagflächen 48 und 52 an entgegengesetzten Enden des Gewindebolzens 32 um 90° gegeneinander verdreht.

Zusätzliche Anschlagflächen werden in beiden Endlagen durch die an der Teilungsfläche 24 stumpf abgeschnittenen Gewindegänge des Gewindeabschnitts 56 der Mutter gebildet, die in der einen Endlage an einer entsprechenden Gegenfläche 70 des Endstücks 36 und in der anderen Endlage an einem Teil der Anschlagfläche 48 des Nockens 46 anschlagen. Somit kann trotz kompakter Bauweise des Spannschlosses und trotz Herstellung aus Kunststoff ein hohes Drehmoment aufgenommen werden, ohne daß es in den Endlagen zu einer elastischen Verformung der Gewindeteile und zu einem Festspannen der Mutter 22 kommt.

Zur Verrastung der Mutter 22 in dem Gehäuse 12 ist an den in das Gehäuse eingreifenden Teilen der Halbschalen 26 in der Nähe der Schultern 62, 64 ein umlaufender Konus 72 ausgebildet, der in Figuren 5 und 6 zu erkennen ist.

## Patentansprüche

1. Spannschloß für einen Kabelzug, mit einem Gehäuse (12) und zwei miteinander in Gewindeeingriff stehenden Gewindeteilen (22, 32), deren erstes ein drehfest und axial verschiebbar in dem Gehäuse geführter Gewindebolzen (32) mit einem Außengewinde (J4) ist, der eine zur Stirnseite offene Ausnehmung (42) zum Einhaken des Kabelzuges aufweist, während das zweite Gewindeteil (22) axialfest und drehbar in dem Gehäuse gehalten ist und eine Drehhandhabe (28) aufweist, dadurch **gekennzeichnet,** daß die Ausnehmung (42) für den Kabelzug in einem Abschnitt des Außengewindes (34) des Gewindebolzens (32) ausgebildet ist, wobei auch dieser Abschnitt bei eingehakten Kabelzug mit dem zweiten Gewindeteil verschrankbar ist.

2. Spannschloß nach Anspruch 1, dadurch **gekennzeichnet,** daß die Ausnehmung (42) durch eine geschlitzte Trennwand (44) in einen inneren Abschnitt zur Aufnahme des verdickten Endes des Innenkabels eines Bowdenzuges und einen äußeren Abschnitt unterteilt ist, und daß an dem Gehäuse (12) eine das Außenkabel des Bowdenzuges umgebende Tülle (16) ausgebildet ist, die in den äußeren Abschnitt der Ausnehmung (42) des Gewindebolzens (32) hineinragt und ein Widerlager für das Außenkabel des Bowdenzuges bildet.

3. Spannschloß nach Anspruch 1 oder 2, dadurch **gekennzeichnet,** daß eines (32) der Gewindeteile an mindestens einem Ende seines Außengewindeabschnitts (34) einen radialen Nocken (38, 40, 46) aufweist, der zum Gewinde hin durch eine mindestens entsprechend der Gewindesteigung ansteigende Fläche (50, 54) begrenzt wird und in Umfangsrichtung eine Anschlagfläche (48, 52) für einen entsprechenden Gegenanschlag (66, 68) des anderen Gewindeteils (22) bildet.

4. Spannschloß nach Anspruch 3, dadurch **gekennzeichnet,** daß die Gewindeteile ein mehrgängiges Gewinde aufweisen und daß die Anzahl der an demselben Ende des Außengewindeabschnitts (34) vorhandenen Anschlagflächen (48, 52) der Anzahl der Gewindegänge entspricht.

5. Spannschloß nach Anspruch 3 oder 4, dadurch **gekennzeichnet,** daß das den Gegenanschlag bildende Gewindeteil (22) an einem Ende seines Innengewindeabschnitts (56) eine schraubenförmig der Gewindesteigung folgende Stirnfläche (62, 64) aufweist, die an mindestens einer Stelle unter Bildung einer Stufe (66) verspringt, und daß diese Stufe (66) den Gegenanschlag bildet.

6. Spannschloß nach einem der Ansprüche 3 bis 5, dadurch **gekennzeichnet,** daß das die Gegenanschläge bildende Gewindeteil (22) eine an einer Teilungsfläche (24) in zwei Halbschalen (26) geteilte Mutter ist, daß der Innengewindeabschnitt (56) in jeder Halbschale (26) an einem Ende durch eine der Gewindesteigung folgende Schulter (58) begrenzt wird und daß der Gegenanschlag (68) durch einen an diese Schulter angrenzenden Bereich der Teilungsfläche (24) gebildet wird.

7. Spannschloß nach Anspruch 6, dadurch **gekennzeichnet,** daß sich an den Innengewindeabschnitt (56) der Mutter (22) jenseits der Schulter (58) ein die Handhabe (28) bildender Abschnitt mit einer Ausnehmung (60) anschließt, die den Nocken (46) aufnimmt.

## Claims

1. Tensioning lock for a control cable, having a housing (12) and two threaded portions (22, 32) which are in thread engagement with one another and the first of which is a threaded bolt (32) which is guided in a rotationally fixed and axially displaceable manner in the housing and which has an external thread (34) and a recess (42), open towards the end face, for the hooking-in of the control cable, while the second threaded portion (22) is held in an axially fixed and rotatable manner in the housing and has a turning handle (28), characterised in that the recess (42) for the control cable is formed in a portion of the external thread (34) of the threaded bolt (32), that portion also being screwable to the second threaded portion when the control cable is hooked in.

2. Tensioning lock according to claim 1, characterised in that the recess (42) is divided by a slotted separating wall (44) into an inner portion for receiving the thickened end of the inner cable of a Bowden wire and into an outer portion, and in that a sleeve (16) surrounding the outer cable of the Bowden wire is formed on the housing (12), projects into the outer portion of the recess (42) of the threaded bolt (32) and forms an abutment for the outer cable of the Bowden wire.

3. Tensioning lock according to claim 1 or 2, characterised in that one (32) of the threaded portions has, at at least one end of its external thread portion (34), a radial cam (38, 40, 46) which is delimited towards the thread by a face (50, 54) rising at least in accordance with the thread pitch, and which, in the circumferential direction, forms a stop face (48, 52) for a corresponding counter-stop (66, 68) of the other threaded portion (22).

4. Tensioning lock according to claim 3, characterised in that the threaded portions have multiple threads, and in that the number of stop faces (48, 52) present at the same end of the external thread portion (34) corresponds to the number of threads.

5. Tensioning lock according to claim 3 or 4, characterised in that the threaded portion (22) forming the counter-stop has, at one end of its internal thread portion (56), an end face (62, 64) which follows the thread pitch helically and which projects at at least one site with the formation of a step (66), and in that the step (66) forms the counter-stop.

6. Tensioning lock according to any one of claims 3 to 5, characterised in that the threaded portion (22) forming the counter-stops is a nut divided at a dividing face (24) into two half-shells (26), in that the internal thread portion (56) is delimited in each half-shell (26) at one end by a shoulder (58) following the thread pitch, and in that the counter-stop (68) is formed by a region of the dividing face (24), which region adjoins that shoulder.

7. Tensioning lock according to claim 6, characterised in that a portion which forms the handle (28) adjoins the internal thread portion (56) of the nut (22), on the other side of the shoulder (58), and has a recess (60) which accommodates the cam (46).

## Revendications

1. Tendeur pour un câble de commande, comprenant un boîtier (12) et deux pièces filetées (22, 32) qui sont en prise l'une avec l'autre et dont la première est une tige filetée (32) à filetage extérieur (34) qui est guidée dans le boîtier de manière fixe en rotation et avec une possibilité de translation axiale et qui est pourvue d'un évidement (42) ouvert vers la face frontale pour accrocher le câble de commande, tandis que la seconde pièce filetée (22) est maintenue dans le boîtier de manière fixe axialement et tournante et comporte une poignée de rotation (28), caractérisé en ce que l'évidement (42) destiné au câble de commande est réalisé dans une portion du filetage extérieur (34) de la tige filetée (32), ladite portion pouvant également être vissée avec la seconde pièce filetée lorsque le câble de commande est accroché.

2. Tendeur selon la revendication 1, caractérisé en ce que l'évidement (42) est divisé par une paroi de séparation fendue (44) en une portion intérieure pour recevoir l'extrémité renflée du câble intérieur d'une transmission Bowden et en une portion extérieure, et en ce que sur le boîtier (12) est ménagé un passe-câble (16) qui entoure le câble extérieur de la transmission Bowden et qui pénètre dans la portion extérieure de l'évidement (42) de la tige filetée (32) et forme un contre-appui pour le câble extérieur de la transmission Bowden.

3. Tendeur selon la revendication 1 ou 2, caractérisé en ce que l'une (32) des pièces filetées comporte, au moins à une extrémité de son filetage extérieur (34), un taquet radial (38, 40, 46) qui, en direction du filetage, est délimité par une surface (50, 54) présentant une pente ascendante au moins équivalente au pas du filetage et qui forme, dans la direction circonférentielle, une surface de butée (48, 52) pour une contre-butée correspondante (66, 68) de l'autre pièce filetée (22).

4. Tendeur selon la revendication 3, caractérisé en ce que les pièces filetées présentent un filetage à pas multiple, et en ce que le nombre de surfaces de butée (48, 52) situées à une même extrémité de la portion de filetage extérieur (34) correspond au nombre de pas de filetage.

5. Tendeur selon la revendication 3 ou 4, caractérisé en ce que la pièce filetée (22) formant la contre-butée présente, à l'une des extrémités de sa portion de filetage intérieur (56), une face frontale (62, 64) de forme hélicoïdale qui suit le pas du filetage et qui fait saillie en au moins un endroit en formant un décrochement (66), et en ce que ledit décrochement (66) forme la contre-butée.

6. Tendeur selon l'une des revendications 3 à 5, caractérisé en ce que la pièce filetée (22) formant les contre-butées est un écrou divisé en deux demi-coques (26) au niveau d'une surface de séparation (24), en ce que la portion de filetage intérieur (56) dans chaque demi-coque (26) est délimitée à l'une de ses extrémités par un épaulement (58) qui suit le pas du filetage, et en ce que la contre-butée (68) est formée par une zone de la surface de séparation (24) adjacente audit épaulement.

7. Tendeur selon la revendication 6, caractérisé en ce qu'au-delà de l'épaulement (58) la portion de filetage intérieur (56) de l'écrou (22) est prolongée par une portion qui forme la poignée (28) et qui est pourvue d'un évidement (60) recevant le taquet (46).
